# EUROPEAN PATENT SPECIFICATION

(11) **EP 2 980 036 B1**
(45) Date of publication and mention of the grant of the patent: **25.04.2018**
(21) Application number: 14002614.7
(22) Date of filing: 28.07.2014
(51) Int. Cl.: C04B 7/52, B02C 23/12

(54) **Method of grinding cement clinker**
Verfahren zum Vermahlen von Zementklinker
Procédé de broyage de clinker de ciment

(43) Date of publication of application: 03.02.2016
(73) Proprietor: HeidelbergCement AG, 69120 Heidelberg (DE)
(72) Inventor: Pandey, Girish, 69120 Heidelberg (DE); Dienemann, Wolfgang, 69256 Mauer (DE); Rosani, Diego, 69181 Leimen (DE)
(74) Representative: Zellentin & Partner mbB Patentanwälte

(56) References cited:
- JP-A- H03 112 837
- US-A- 5 392 998
- US-A1- 2012 012 034
- W. DIENEMANN ET AL: "Belit-Calciumsulfoaluminate-Ternesite (BCT) - eine neue Klinkertechnologie mit niedrigem CO2-Ausstoß", CEMENT INTERNATIONAL, vol. 11, 1 April 2013 (2013-04-01), pages 100-109, XP055160392,

## Description

The present invention relates to a method of grinding cement clinker comprising at least two kinds of clinker phases with differing grindability.

The bulk of cement is manufactured in kilns that produce clinker nodules of different sizes. Typically, the nodules are fed into a mill for grinding to cement with a desired fineness. Several mill types are known, the most commonly used mills are roller mills and ball mills. Grinding or milling is a step requiring considerable energy. Therefore, numerous attempts have been made to optimize the mills and/or the grinding process. It is further known to add grinding additives.

CN1410379 A describes a process for preparing high-grade cement with serial cascaded mills in which two or more open-loop or closed-loop mill systems are serially connected and each of them are controlled according to the requirement of fineness and specific surface area. Figure 1 of this document is reproduced as figure 1. It shows that all material leaving the first mill enters the second mill. A similar method is shown in JP 2004-188368 A. For clinkers containing phases with differing grindability this approach provides the easier to grind phase(s) in higher fineness than the harder to grind phase(s). The mills often cannot operate ideally due to a high content of fine material.

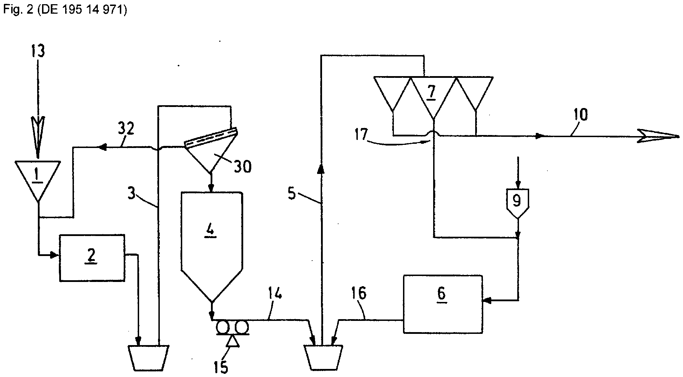

DE 195 14 971 illustrates a method for an energy efficient production of fine material, especially from cement clinker, comprising: (a) adjusting the output of a pre-grinding stage to a maximum permissible particle size in a pre-grinding circuit; (b) mixing the material with the output of a fine grinding stage; (c) feeding the mixture into an air classification stage to separate coarse and fine fractions; (d) delivering the coarse fraction for post-grinding in the fine grinding stage; and (e) discharging the fine fraction as the finished product. Optionally, the fine fraction undergoes a second classification into a final product and coarser product, whereby the coarser product is recycled into the fine grinding stage together with the mixture of the output of the fine grinding stage and fine material from the air classification. The device is depicted in figure 2. This method is complicated and requires a very large air classification stage to cope with the combined output of the pre-grinding stage and the fine grinding stage. A similar process is described in WO 2009/043510 A2.

US 4,690,335 A,US 4,783,012 A, and US 5,110,056 A propose to optimize two stage grinding methods using a roller mill as first stage, a sifter and a second downstream mill. Grit resulting from the roller mill is returned to the roller mill in a proportion to maintain the filling level of combined fresh material and grit substantially constant.

According to its abstract JP H03-112837 A describes a method enabling the production of two kinds of cement having different compositions from one kind of clinker by primarily crushing the clinker, classifying the crushed cement clinker into fine clinker and coarse clinker and separately subjecting the clinkers to secondary crushing to obtain different kinds of cement products. The fine clinker becomes a fine cement with high alite content and the coarse fraction becomes a normal cement with not too much reduced alite content. Alite, the easier to grind phase, is finer than belite, the harder to grind phase, in both cements in the end.

One still not solved problem is the grinding of clinkers that comprise phases of different grindability wherein the harder to grind phase is finer in the end. With regard to this invention clinker phase denotes a component of the clinker like belite, ye'elimite and so on. The clinker phase is typically not a pure mineral but contains varying amounts of foreign ions as is typical in technical materials. For example, Al can be replaced partly or even predominantly by Fe. The problem of differing grindability is acute in cases where the harder to grind clinker phase is less reactive and is desired to be finer. One such example are belite-calciumsulfoaluminate (BC) clinkers, see for example US 2011/0073013 A1, and US 2012/0085265 A1, and the newly developed belite-calciumsulfoaluminate-ternesite (BCT) clinkers, see for example WO 2013/023731 A2, WO 2013/023728 A2, and WO 2013/023729 A2. These cements comprise calciumsulfoaluminate or ye'elimite and belite as main phases. Ye'elimite is easy to grind and belite is hard to grind, but belite should have a higher fineness to provide the desired hydraulic reactivity.

A similar problem arises with respect to grinding Portland clinker and other cement constituents, e.g. limestone or blast-furnace slag. The solution applied in that case is to grind the components separately, but this cannot be applied to BC and BCT clinkers, since the clinker phases come out of the kiln as mixture. The known methods either fail to obtain the full reactivity of belite, or ye'elimite is ground more finely than desired. This does not only require energy, but is also problematic for workability of the cement paste. Fine materials increase the water demand, but more water in turn diminishes the mechanical properties of the hardened paste. Therefore, chemical admixtures have to be added to adjust workability, which is costly and not always sufficient to solve the problem satisfactorily.

Surprisingly a solution could be found by grinding the clinker in two steps, wherein the easy to grind clinker phases are ground to a predetermined fineness, preferably the desired fineness, in the first mill, the output of the first mill is fed into a separator and divided into a fine and a coarse fraction, the coarse fraction is transferred into a second mill and ground to the desired fineness while the output of the second mill and the fine fraction from the first separator are combined to obtain the cement. In this way, it is possible to grind the clinker phases that are hard to grind essentially separately from the easy to grind phases. As a result, both kinds of phases are obtained in the desired fineness, unnecessary energy consumption and device wear are avoided and the cement does not have an undesired amount of overly fine particles. The cement shows ideal reactivity and optimal workability of the paste without addition of chemical admixtures during e.g. mortar or concrete preparation.

Thus, the above mentioned problem is solved by a method of manufacturing cement from cement clinkers comprising at least two kinds of clinker phases with differing grindability, comprising the steps:
- feeding the cement clinker to a first milling stage
- grinding the cement clinker in the first milling stage with a setting of grinding power and grinding time that allows grinding an easier to grind phase to a predetermined maximum particle size while a harder to grind phase maintains a particle size larger than the predetermined maximum particle size
- transferring the output from the first milling stage to a first separator dividing the output into a first fraction with the predetermined maximum particle size and a second fraction with a larger particle size
- transferring the second fraction with a larger particle size to a second milling stage and
- grinding the second fraction with a larger particle size in the second milling stage to a final maximum particle size that is smaller than the predetermined maximum particle size and
- combining the first fraction (with the predetermined maximum particle size) and the second fraction (with a larger particle size after the first milling stage and ground to the final maximum particle size being smaller than the predetermined maximum particle size) to obtain the cement. If the predetermined maximum particle size is larger than the desired particle size for this phase, the fine fraction from the first milling stage is subjected to a third milling stage before mixing.

Thus, according to the invention the first milling stage which includes a separator is utilized to separate one or more easier to grind phases in a clinker from one or more harder to grind phases. This is a completely novel approach and radically different from the prior proposals trying to enhance grinding efficiency by using more than one milling stage in that according to the invention the coarser particles from the first milling stage are ground to another fineness inside the second milling stage than the fine materials from the first milling stage. Prior approaches aimed at uniform fineness as end result.

Preferred embodiments of the methods according to the invention are the subject of dependent claims and described in detail in the following. It is possible to add one or more of the further steps/devices described in the following to optimize the methods.

All the mills can be of any kind known per se. e.g. single- or multichamber ball mill, central discharge mill, vertical roller mill, impact mill, hammer mill, roller press, horomill, etc. Preferred devices are ball mills, roller press and vertical roller mills. The mill circuits are configured in a manner known per se to provide the predetermined/desired fineness and throughput. Specifically, the grinding time, the grinding power and other parameters are adjusted.

In the first milling stage it is important that the mill and grinding parameters are selected such that the easiest/easier to grind phase or phases of the clinker is/are ground to a particle size finer than that of the harder to grind phase(s). Ideally, substantially all or most of the easiest/easier to grind phase(s) is(are) ground to the predetermined particle size and substantially all or most of the harder to grind phase(s) remain in a coarser particle size. A roller mill, preferably a vertical roller mill or a roller press, as mill in the first milling stage is specifically useful, because it provides an optimal separation of the materials. In presence of particularly soft to grind phases even a crusher (e.g. jaw crusher, hammer crusher, etc.) can be foreseen.

In the second milling stage the most important object is to grind the material comprising the harder to grind phase(s) to the desired fineness without wasting energy or producing particles with too low particle size. Therefore, the second milling stage should have a separator or a mill of a type ensuring this. Preferably, the output from the second mill is fed to a second separator to separate parts that are fine enough and recycle parts that need further grinding to the second mill. For the second milling stage a ball mill with separator, preferably a sifter or air classifier, is preferred.

A third milling stage or even more milling stages can be used. This can be preferred in cases where the clinker comprises phases that are easy to grind, phases that are hard to grind and one or more phase(s) with an intermediate grindability wherein each needs a different particle size for optimal properties. For each miling stage used to separate materials according to their grindability a separator is needed, that divides the easier to grind and therefore finer particles from the rest of the materials. Additional milling stages can also serve to grind additional components to be added to the cement and/or be utilized to grind the easier to grind phase(s) to a finer particle size than that obtained in the first milling stage.

In each milling stage one, two or even more mills can be used. Advantageously each milling stage and even more preferred each mill is provided with a separator.

The separation can take place in static separators, dynamic separators of 1^{st}, 2^{nd}, 3^{rd} generation, VRM separators, etc. that are known per se.

As known per se it is possible to include a disagglomerator, in particular when a roller press is used.

Further components can be added to the clinker before grinding or into one or more of the milling stages. Preferably, additional components are added into a milling stage for the clinker phase that has a similar grindability or the same desired fineness. Further components could be sulfate carrier, fillers, supplementary cementitious materials, for example fly ash, blast furnace slag, calcined clay, etc.. Further components can of course also be ground separately.

Specially suited grinding aids can be added at each specific grinding stage to improve efficiency of grinding and separation. The desired effect of grinding aids is to decrease particle agglomeration, thus limiting the undesired transport of fine particles into the coarse fraction and viceversa. Their use in the described invention can improve the sharpness of separation of the particles with different size and grindability and make the process even more efficient. If required, grinding aids comprising chemical agents able to improve particle performance, such as accelerators, retarders, plasicizers, fluidifiers, water reducers, etc. can be used to impart additional properties to the particle fraction generated in each grinding step.

The method according to the invention provides a cement in which the or a harder to grind phase(s) can have a higher fineness than the or an easier to grind phase. The method is based on the surprising finding, that in clinkers containing at least two phases with different grindability a first grinding stage with separator can divide the easier to grind phase(s) essentially completely from the harder to grind phase(s). The very small amounts of easier to grind phase(s) transferred to the second grinding are usually not problematic. Thus, each phase can be to a large extent individually ground to the optimal fineness so that a cement with improved reactivity and workability is obtained.

The required or desired fineness for specific clinker phases is known in the art and is predominantly determined by the intended use of the cement. For example, a useful fineness for belite contained in a C$A cement clinker ranges from 3800 to 4000 cm²/g according to Blaine for typical concrete applications while the fineness of the ye'elimite should be about 200 to 300 cm²/g lower or in the range from 60 to 70 % of the fineness of the belite. Naturally, when an application requiring fine cement is aimed at, the absolute fineness is considerably higher while at least the absolute difference in fineness remains the same, in some cases the relative difference remains the same.

The cement obtained can be processed further in all known manners. Typically it will be mixed with chemical admixtures and/or additives to provide a binder with tailored properties. The cement obtained according to the invention is useful for making concrete, mortar, construction chemical products and for other uses of known cements. The described process is particularly advantageous for the production of cements having the same properties, but comparably lower fineness than cements ground using conventional methods, to reduce water demand or increase workability in the designed application.

The invention will be illustrated further with reference to the figures, without restricting the scope to the specific embodiments described. The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. If not otherwise specified any amount in % or parts is by weight and in the case of doubt referring to the total weight of the composition/mixture concerned.

In the figures:
Figure 1 shows a grinding method according to CN 1410379 A
Figure 2 shows a grinding process according to DE 195 14 971
Figure 3 shows a grinding process according to the invention
Figure 4 shows a second grinding process according to the invention
Figure 5 shows a third grinding process according to the invention

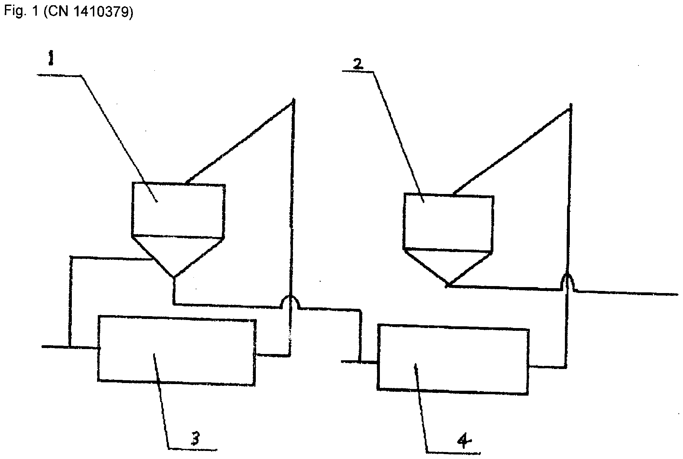

The process of the prior art illustrated in figure 1 optimizes the grinding by using two mills which are serial connected. For each mill a sifter is provided that separates the material ground to the fineness desired in that stage from the still coarser material. The coarser material is recycled into the preceding milling stage, the finer material is transferred to the following milling stage. With this approach a clinker comprising a phase easier to grind than at least one other phase of the clinker will lead to a cement in which the easier to grind phase is finer than the harder to grind phase. Energy consumption is high, since typically high amounts of finer than necessary material are present in the second stage.

The improved prior art method illustrated in figure 2 optimizes the energy demand and substantially avoids grinding to more than the desired fineness. The energy efficient production of fine material from cement clinker (13), comprises the steps: (a) adjusting the output (14) of a pre-grinding stage (2) to a maximum permissible particle size in a pre-grinding circuit (30, 32); (b) mixing the material with the output (16) of a fine grinding stage (6); (c) feeding the mixture into an air classification stage (7) to separate coarse (17) and fine (10) fractions; (d) delivering the coarse fraction (17) for post-grinding in the fine grinding stage (6); and (e) discharging the fine fraction (10) as the finished product. However, this means a lot of material to handle for the air classifier and it still does not allow to individually adjust the fineness of clinker phases with different grindability.

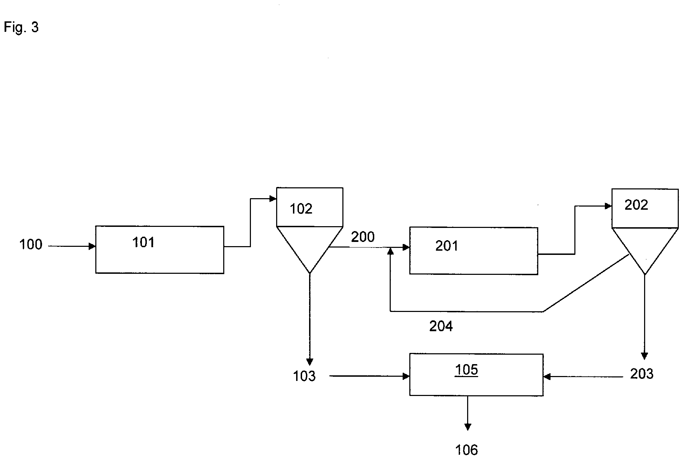

The method according to the invention illustrated in figure 3 uses analogous devices in principle, however, the material streams are different. The clinker 100 is fed to the first mill 101. The output from the first mill 101 is fed to a first separator 102, which divides the output into material 103 with a particle size as desired after mill 101 and a material 200 with a particle size above that desired for the output of mill 101. The fine material 103 contains substantially most of the easier to grind phase(s) and is transferred to a reservoir or mixing stage 105. The coarse material 200 contains substantially most of the harder to grind phase(s) and is fed into the second mill 201. There it is ground to the desired fineness, which is finer than that of material 103. Typically, a second separator 202 is assigned to the second mill 201, so that output of the second mill 201 can be divided into fine enough material 203 and material 204 recycled into the second mill 201. It would of course be possible to operate the second mill 201 without a separator 202 when the mill 201 provides the desired particle size distribution. The fine enough material 203 from the second mill 201 is combined with the fine material 103 from the first mill 101 in the reservoir or mixing stage 105 to provide the cement 106 comprising the easier to grind phase(s) with a lower fineness than the harder to grind phase(s).

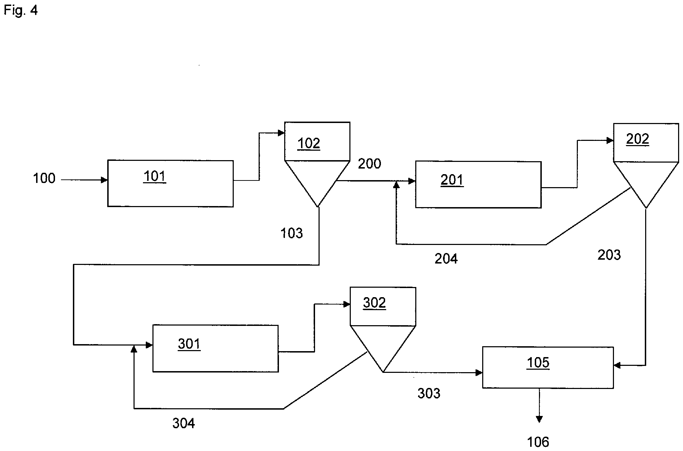

The variant shown in figure 4 uses an additional separate fine milling stage with third mill 301, separator 302, material 304 returned to the mill 301 and output 303 for the easy to grind phase 103 separated off after the first grinding stage. In other respects, the method does not differ from the one shown in figure 3. This is for example useful when the easier to grind phase(s) have to be ground to a desired final particle size above the maximum particle size in the first milling stage to ensure good separation of the phases.

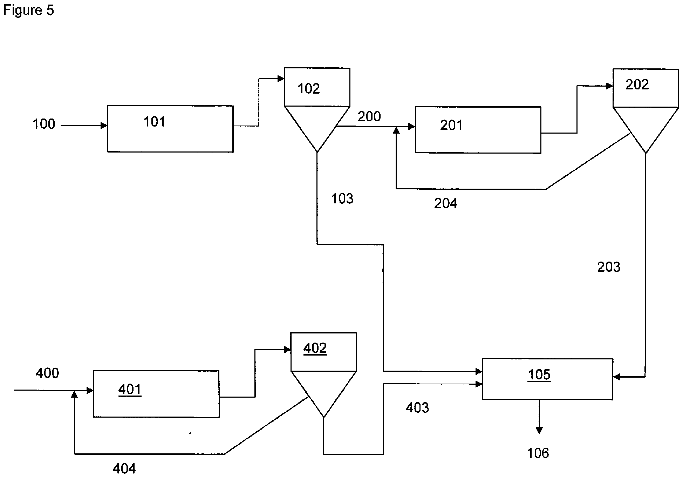

A further variant illustrated in figure 5 uses a separate milling stage for the separate grinding of other cement constituents 400, such as supplementary cementitious materials (e.g. fly ash, blast furnace slag, pozzolanic materials, etc.) and/or limestone or other fillers and/or sulfate carrier. The material 400 ground in mill 401 is fed to separator 402, where the fine enough material 403 is separated from the coarser material 404 and conveyed to the finished product 106 and the still coarse material 404 is recycled into mill 401. It would of course be possible to operate mill 401 without a separator 402 when the mill provides the desired particle size distribution.

The method illustrated in Figures 3, 4, and 5 also allows the addition of e.g. gypsum or other set regulators or cement constituents in any or more than one mill or separator among 101, 102, 201, 202, 301, 302, 401, and 402 in dependence of the fineness and grindability of the material added and its desired fineness.

The benefit of the method according to the invention is demonstrated with a belite-calcium sulfoaluminate clinker. This clinker contains two main phases, belite and ye'elimite or C₂S and C₄A₃$ in cement chemists notation abbreviating oxides as follows: H - H₂O, C - CaO, A - Al₂O₃, F - Fe₂O₃, M - MgO, S - SiO₂ und $ - SO₃. Of course, all the phases can contain varying amounts of foreign ions, e.g. aluminum A can be partly (or even predominantly) replaced by iron F, as is usual in technical products. In a cement obtained by grinding such a clinker the belite C₂S mostly contributes to final strength and the ye'elimite C₄A₃$ plus added sulfate is responsible for the early hydration and strength development reactions. Those phases differ considerably with respect to grindability. Belite is harder to grind than ye'elimite but needs a higher fineness to provide adequate strength development and if applicable enough lime to properly activate/react with added supplementary cementitious materials.

Grinding the clinker with a method as illustrated in figure 3, wherein the first mill 101 is a roller press, a ball mill or a vertical mill provides substantially all or most of the ye'elimite as phase 103 and substantially all or most of the belite as phase 200. Belite is then ground to the desired higher fineness in mill 201. Mixing phases 103 and 203 provides the cement containing a finely ground and highly reactive belite and a ye'elimite that is coarser so that it does not impair workability.

### List of reference numbers:

figure 1
   - 1: first sifter
   - 2: first mill
   - 3: second sifter
   - 4: second mill
figure 2
   - 1: reservoir for clinker
   - 2: pre-grinding mill
   - 3: transport means
   - 4: temporary storage
   - 5: bucket conveyor
   - 6: fine-grinding mill
   - 7: sifter
   - 10: fine fraction
   - 13: clinker
   - 14: output from pre-grinding mill
   - 15: volumetric dosage discharge means
   - 16: output from fine-grinding mill
   - 17: coarse fraction
   - 30: sieving station
   - 32: recycling means
figures 3, 4 and 5
   - 100: clinker
   - 101: first mill
   - 102: first separator
   - 103: fine material from output from first mill (easy to grind phase(s))
   - 105: reservoir or mixing
   - 106: cement
   - 200: coarse material from output from first mill
   - 201: second mill
   - 202: second separator
   - 203: fine material from output of second mill (hard to grind phase(s))
   - 204: coarse material from output from second mill
   - 301: third mill
   - 302: third separator
   - 303: fine material from third mill
   - 304: coarse material from third mill
   - 401: fourth mill
   - 402: fourth separator
   - 403: fine material from fourth mill
   - 404: coarse material from fourth mill

## Claims

1. Method of manufacturing a cement from a cement clinker (100) comprising at least two kinds of clinker phases with differing grindability, comprising the steps:
- feeding the cement clinker (100) to a first milling stage
- grinding the cement clinker (100) in the first milling stage with a setting of grinding power and grinding time that allows grinding an easier to grind phase to a predetermined maximum particle size while a harder to grind phase maintains a particle size larger than the predetermined maximum particle size
- transferring the output from the first milling stage to a first separator (102) dividing the output into a first fraction (103) with the predetermined maximum particle size and a second fraction (200) with a larger particle size
- transferring the second fraction (200) with a larger particle size to a second milling stage
- grinding the second fraction (200) with a larger particle size in the second milling stage to a final maximum particle smaller than the predetermined maximum particle size and
- combining the first fraction (103) with the predetermined maximum particle size, optionally after grinding in a third mill (300), with the second fraction (200) with a larger particle size after the first milling stage and ground to a final maximum particle size below the predetermined maximum particle size in the second milling stage, wherein the harder to grind phase has a higher fineness than the easier to grind phase.

2. Method according to claim 1, wherein a second separator (202) is included in the second milling stage, the output from a mill (201) of the second milling stage is transferred to the second separator (202) and divided into a fraction (203) with the final desired fineness and a fraction (204) with coarser particles which is recycled into the second mill (201).

3. Method according to claim 1 or 2, wherein a roller press, a ball mill or a vertical mill, preferably a roller press, a vertical roller mill or a crusher is used as mill (101) in the first milling stage.

4. Method according to claim 1, 2 or 3, wherein a ball mill or a vertical roller mill is used as mill (201) in the second milling stage.

5. Method according to any one of claims 1 to 4, wherein the first separator (102) is a sifter, an air classifier, a VRM separator or a dynamic separator of the 1^{st}, 2^{nd}, or 3^{rd} generation.

6. Method according to any one of claims 2 to 5, wherein the second separator (202) is a sifter, an air classifier, a VRM separator or a dynamic separator of the 1^{st}, 2^{nd}, or 3^{rd} generation.

7. Method according to any one of claims 1 to 6, wherein a disagglomerator is used to disagglomerate the output from the first milling stage and/or the second milling stage.

8. Method according to any one of claims 1 to 7, wherein the first fraction (103) with the predetermined maximum particle size is transferred to a third milling stage (300) and ground to a desired fineness.

9. Method according to any one of claims 1 to 8, wherein the clinker is a belite-calciumsulfoaluminate clinker or a belite-calciumsulfoaluminate-ternesite clinker.

10. Method according to any one of claims 1 to 9, wherein one or more additional components are added before, during or after grinding.

11. Method according to claim 10, wherein the additional one or more components are chosen from the group consisting of sulfate carrier, fillers, preferably limestone, and supplementary cementitious materials, preferably slag, ashes, and mixtures of two or more of them.

12. Method according to claim 11, wherein the slag is ground granulated blast furnace slag and/or the the ashes are fly ash.

## Patentansprüche

1. Verfahren zur Herstellung von Zement aus einem Zementklinker (100) umfassend mindestens zwei Arten von Klinkerphasen mit unterschiedlicher Mahlbarkeit, umfassend die Schritte:
- Zuführen des Zementklinkers (100) in eine erste Mahlstufe
- Mahlen des Zementklinkers (100) in der ersten Mahlstufe mit einer Einstellung der Mahlleistung und Mahldauer, die das Mahlen einer leichter zu mahlenden Phase auf eine vorbestimmte maximale Partikelgröße ermöglicht, während eine schwerer zu mahlende Phase eine Partikelgröße behält, die größer als die vorbestimmte maximale Partikelgröße ist
- Überführen des Produkts der ersten Mahlstufe in einen ersten Separator (102), der das Produkt in eine erste Fraktion (103) mit der vorbestimmten maximalen Partikelgröße und eine zweite Fraktion (200) mit einer größeren Partikelgröße aufteilt
- Überführen der zweiten Fraktion (200) mit einer größeren Partikelgröße in eine zweite Mahlstufe
- Mahlen der zweiten Fraktion (200) mit einer größeren Partikelgröße in der zweiten Mahlstufe bis zu einer endgültigen maximalen Partikelgröße, die kleiner als die vorbestimmte maximale Partikelgröße ist und
- Kombinieren der ersten Fraktion (103) mit der vorbestimmten maximalen Partikelgröße, gegebenenfalls nach Mahlen in einer dritten Mühle (300), mit der zweiten Fraktion (203), nach der ersten Mahlstufe, die eine größere Partikelgröße hat und auf eine endgültige maximale Partikelgröße unterhalb der vorbestimmten maximalen Partikelgröße gemahlen wurde, wobei die schwerer zu mahlende Phase eine höhere Feinheit als die leichter zu mahlende Phase hat.

2. Verfahren gemäß Anspruch 1, wobei ein zweiter Separator (202) in der zweiten Mahlstufe enthalten ist, das Produkt einer Mühle (201) der zweiten Mahlstufe in den zweiten Separator (202) überführt und in eine Fraktion (203) mit der endgültigen gewünschten Feinheit und eine Fraktion (204) mit gröberen Partikeln, die in die zweite Mühle (201) zurückgeführt werden, geteilt wird.

3. Verfahren gemäß Anspruch 1 oder 2, wobei als Mühle (101) in der ersten Mahlstufe eine Walzenpresse, eine Kugelmühle oder eine Vertikalmühle, vorzugsweise eine Walzenpresse, eine Vertikalwalzenmühle oder ein Brecher verwendet wird.

4. Verfahren gemäß Anspruch 1, 2 oder 3, wobei eine Kugelmühle oder eine Vertikalwalzenmühle als Mühle (201) in der zweiten Mahlstufe verwendet wird.

5. Verfahren gemäß einem der Ansprüche 1 bis 4, wobei der erste Separator (102) ein Sieb, ein Luftklassifizierer, ein VRM-Separator oder ein dynamischer Separator der 1., 2. oder 3. Generation ist.

6. Verfahren gemäß einem der Ansprüche 2 bis 5, wobei der zweite Separator (202) ein Sieb, ein Luftklassifizierer, ein VRM-Separator oder ein dynamischer Separator der 1., 2. oder 3. Generation ist.

7. Verfahren gemäß einem der Ansprüche 1 bis 6, wobei ein Desagglomerator verwendet wird, um das Produkt der ersten Mahlstufe und/oder der zweiten Mahlstufe zu desagglomerieren.

8. Verfahren gemäß einem der Ansprüche 1 bis 7, wobei die erste Fraktion (103) mit der vorbestimmten maximalen Partikelgröße in eine dritte Mahlstufe (300) überführt und auf eine gewünschte Feinheit gemahlen wird.

9. Verfahren gemäß einem der Ansprüche 1 bis 8, wobei der Klinker ein Belit-Calciumsulfoaluminat-Klinker oder ein Belit-Calciumsulfoaluminat-Ternesit-Klinker ist.

10. Verfahren gemäß einem der Ansprüche 1 bis 9, wobei eine oder mehrere zusätzliche Komponente(n) vor, während oder nach dem Mahlen zugegeben werden.

11. Verfahren gemäß Anspruch 10, wobei die zusätzliche(n) Komponente(n) ausgewählt ist(sind) aus der Gruppe bestehend aus Sulfatträger, Füllstoffen, vorzugsweise Kalkstein, und Klinkerersatzmaterialien, vorzugsweise Schlacken, Aschen, und Mischungen von zwei oder mehr davon.

12. Verfahren gemäß Anspruch 11, wobei die Schlacke Hüttensand ist und/oder die Aschen Flugasche sind.

## Revendications

1. Procédé de fabrication d'un ciment à partir d'un clinker de ciment (100) comprenant au moins deux types de phases de clinker avec une aptitude différente au broyage, comprenant les étapes de :
- alimentation du clinker de ciment (100) dans un premier étage de broyage
- broyage du clinker de ciment (100) dans le premier étage de broyage avec un réglage de puissance de broyage et de temps de broyage qui permet de broyer une phase plus facile à broyer à une taille de particules maximum prédéterminée tandis qu'une phase plus difficile à broyer conserve une taille de particules plus grande que la taille de particules maximum predetermine
- transfert de la sortie du premier étage de broyage jusqu'à un premier séparateur (102) divisant la sortie en une première fraction (103) avec la taille de particules maximum prédéterminée et une deuxième fraction (200) avec une taille de particules plus grande
- transfert de la deuxième fraction (200) avec une taille de particules plus grande dans un deuxième étage de broyage
- broyage de la deuxième fraction (200) avec une taille de particules plus grande dans le deuxième étage de broyage à une taille de particules maximum finale plus petite que la taille de particules maximum predetermine et
- combinaison de la première fraction (103) avec la taille de particules maximum prédéterminée, facultativement après broyage dans un troisième broyeur (300), avec la deuxième fraction (203) avec une taille de particules plus grande après le premier étage de broyage et broyée à une taille de particules maximum finale inférieure à la taille de particules maximum prédéterminée dans le deuxième étage de broyage, dans lequel les ou une phase(s) plus difficile(s) à broyer a/ont une finesse supérieure à celle de la ou d'une phase plus facile à broyer.

2. Procédé selon la revendication 1, dans lequel un deuxième séparateur (202) est inclus dans le deuxième étage de broyage, la sortie d'un broyeur (201) du deuxième étage de broyage est transférée jusqu'au deuxième séparateur (202) et divisée en une fraction (203) avec la finesse désirée finale et une fraction (204) avec des particules plus grossières qui est recyclée dans le deuxième broyeur (201).

3. Procédé selon la revendication 1 ou 2, dans lequel une presse à cylindres, un broyeur à boulets ou un broyeur vertical, préférablement une presse à cylindres, un broyeur à cylindres vertical ou un concasseur est utilisé(e) comme le broyeur (101) dans le premier étage de broyage.

4. Procédé selon la revendication 1, 2 ou 3, dans lequel préférablement un broyeur à boulets ou un broyeur à cylindres vertical est utilisé comme le broyeur (201) dans le deuxième étage de broyage.

5. Procédé selon l'une quelconque des revendications 1 à 4, dans lequel le premier séparateur (102) est un crible, un classificateur à l'air, un séparateur de broyeur à cylindres vertical ou un séparateur dynamique de 1^{ère}, 2^{ème} ou 3^{ème} génération.

6. Procédé selon l'une quelconque des revendications 2 à 5, dans lequel le deuxième séparateur (202) est un crible, un classificateur à l'air, un séparateur de broyeur à cylindres vertical ou un séparateur dynamique de 1^{ère}, 2^{ème} ou 3^{ème} génération.

7. Procédé selon l'une quelconque des revendications 1 à 6, dans lequel un désagglomérateur est utilisé pour désagglomérer la sortie du premier étage de broyage et/ou du deuxième étage de broyage.

8. Procédé selon l'une quelconque des revendications 1 à 7, dans lequel la première fraction (103) avec la taille de particules maximum prédéterminée est transférée dans un troisième étage de broyage (300) et broyée à une finesse désirée.

9. Procédé selon l'une quelconque des revendications 1 à 8, dans lequel le clinker est un clinker de bélite-sulfate aluminocalcique ou un clinker de bélite-sulfate aluminocalcique-ternésite.

10. Procédé selon l'une quelconque des revendications 1 à 9, dans lequel un ou plusieurs composant(s) additionnel(s) est/sont ajouté(s) avant, pendant ou après le broyage.

11. Procédé selon la revendication 10, dans lequel le/les composant(s) additionnel(s) est/sont choisi(s) parmi le groupe consistant en un support de sulfate, des charges, préférablement du calcaire, et des matières cimentaires complémentaires, préférablement du laitier, des cendres, et des mélanges de deux ou plus de ceux-ci.

12. Procédé selon la revendication 11, dans lequel le laitier est un laitier de haut-fourneau granulé broyé, et/ou les cendres sont des cendres volantes.
